# EUROPEAN PATENT APPLICATION

(11) **EP 3 643 519 A1**
(43) Date of publication of application: **29.04.2020**
(21) Application number: 18819653.9
(22) Date of filing: 07.06.2018
(51) Int. Cl.: B60C 9/20, B60C 9/18, B60C 9/22

(54) **PNEUMATIC TIRE**

(30) Priority: 19.06.2017 JP 2017119901
(71) Applicant: Bridgestone Corporation, Tokyo 104-8340 (JP)
(72) Inventor: HASEGAWA, Keiichi, Tokyo 104-8340 (JP); ARIMA, Masayuki, Tokyo 104-8340 (JP)
(74) Representative: Oxley, Robin John George
(86) International application number: PCT/JP2018/021879
(87) International publication number: WO 2018/235621

(57) **Abstract**

A pneumatic tire of the present disclosure comprises a resin-coated belt formed by arranging a wire coated with a coating resin in a tire width direction, a base ring that comes in contact with a tire widthwise outer end of the resin-coated belt is provided on a tire radial inside of the resin-coated belt, a tire widthwise inner end of the base ring is located on an inner side of the tire widthwise outer end of the resin-coated belt in a tire width direction, while a tire widthwise outer end of the base ring is located on an outer side of the tire widthwise outer end of the resin-coated belt in the tire width direction, and the resin-coated belt has a rigidity changing portion where a rigidity changes from the tire widthwise inner side toward the tire widthwise outer side in a tire widthwise region from the tire widthwise inner end of the base ring to the tire widthwise outer end of the resin-coated belt.

## Description

### TECHNICAL FIELD

The present disclosure relates to a pneumatic tire.

### BACKGROUND

Heretofore, in a pneumatic tire, a belt has been usually disposed on an outer side of a carcass in a tire radial direction to exert a hoop effect of fastening the carcass and to heighten a rigidity of a tread (e.g., Patent Literature 1).

In recent years, demand for weight reduction of a tire has risen, and it has therefore been suggested that a wire coated with a coating resin is used as a belt. By use of such a resin-coated belt, the above function of the belt can be exerted while achieving the weight reduction, because the resin has a high rigidity for its weight.

### CITATION LIST

### Patent Literature

PTL 1: Japanese Patent Laid-Open No. 1998-035220

### SUMMARY

### (Technical Problem)

In a case where a resin-coated belt is used in a pneumatic tire, however, a sharp and large difference in level of rigidity occurs in a tire width direction with a tire widthwise end of the resin-coated belt as a boundary, due to a high rigidity of the resin-coated belt. Consequently, an end portion of the resin-coated belt is easily noticeably strained. It has been desired that occurrence of a failure in the end portion of the resin-coated belt due to the strain is inhibited.

Therefore, it is an object of the present disclosure to provide a pneumatic tire that is capable of inhibiting occurrence of a failure in an end portion of a resin-coated belt.

### (Solution to Problem)

A gist configuration of the present disclosure is as follows.

A pneumatic tire of the present disclosure comprises a resin-coated belt formed by arranging a resin-coated wire coated with a coating resin in a tire width direction, wherein:
a base ring that comes in contact with a tire widthwise outer end of the resin-coated belt is provided on a tire radial inside of the resin-coated belt;
a tire widthwise inner end of the base ring is located on an inner side of the tire widthwise outer end of the resin-coated belt in a tire width direction, while a tire widthwise outer end of the base ring is located on an outer side of the tire widthwise outer end of the resin-coated belt in the tire width direction; and
the resin-coated belt has a rigidity changing portion where a rigidity changes from the tire widthwise inner side toward the tire widthwise outer side in a tire widthwise region from the tire widthwise inner end of the base ring to the tire widthwise outer end of the resin-coated belt.

In the present description, "the tire widthwise spacings of the wire" refers to the distance between centers of wire portions.

### (Advantageous Effect)

According to the present disclosure, there can be provided a pneumatic tire that is capable of inhibiting occurrence of a failure in an end portion of a resin-coated belt.

### BRIEF DESCRIPTION OF THE DRAWINGS

In the accompanying drawings:
FIG. 1 is a schematic partially cross-sectional view in a tire width direction, illustrating a tire widthwise half portion of a pneumatic tire according to an embodiment of the present disclosure;
FIG. 2 is a schematic partially cross-sectional view in a tire width direction, illustrating a resin-coated belt of a pneumatic tire according to a different embodiment of the present disclosure;
FIG. 3 is a schematic partially cross-sectional view in a tire width direction, illustrating a resin-coated belt of a pneumatic tire according to another embodiment of the present disclosure;
FIG. 4 is a schematic partially cross-sectional view in a tire width direction, illustrating a resin-coated belt of a pneumatic tire according to yet another embodiment of the present disclosure; and
FIG. 5 is a schematic partially cross-sectional view in a tire width direction, illustrating a resin-coated belt of a pneumatic tire according to still yet another embodiment of the present disclosure.

### DETAILED DESCRIPTION

Hereinafter, embodiments of the present disclosure will be illustrated and described in detail with reference to the drawings.

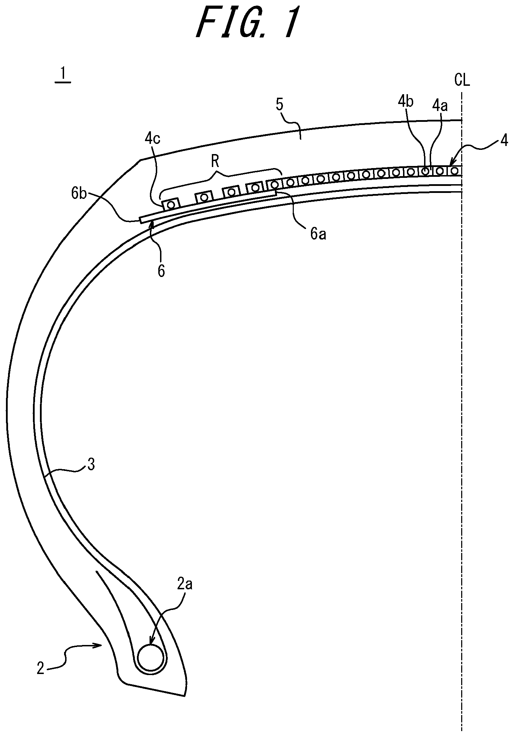

FIG. 1 is a schematic partially cross-sectional view in a tire width direction, illustrating a tire widthwise half portion of a pneumatic tire according to an embodiment of the present disclosure. FIG. 1 only illustrates one tire widthwise half portion with a tire equatorial plane CL as a boundary, and omits depiction of the other half portion. The other half portion also has a similar configuration. A pneumatic tire 1 (hereinafter also referred to simply as the tire) of the present embodiment includes a resin-coated belt 4 in which a wire 4b coated with a coating resin 4a is arranged in a tire width direction, and a tread 5 in this order, on a tire radial outer side of a crown portion of a carcass 3 that toroidally straddles bead cores 2a embedded in a pair of bead portions 2.

In the present disclosure, there are not any special restrictions on a belt structure, and a tire structure other than configurations of an after-mentioned base ring, and the structure can be configured using a usual rubber according to the convention.

For example, in the present embodiment, the structure includes the bead core 2a formed by bundling steel wires, but there are not any special restrictions on a material and a shape of the bead core. Alternatively, the structure does not have to include the bead core 2a. Furthermore, in the present embodiment, the carcass 3 is formed with a carcass ply made of organic fibers, and there are not any special restrictions on a material or number of carcass plies.

In the present embodiment, the resin-coated belt 4 is a spiral belt formed by spirally winding, about a tire axis, a resin-coated wire formed by coating the wire 4b with the coating resin 4a. In the present disclosure, for example, it is possible that the resin-coated belt 4 comprises one layer. A resin containing a wire has a high rigidity, and hence, a tread rigidity can be sufficiently heightened with the one layer, which is also preferable from a viewpoint of weight reduction. The resin-coated belt 4 can have a tire widthwise width that is, for example, from 90 to 120% of a tire ground contact width.

In the wire 4b, an arbitrary known material can be used, and, for example, a steel cord can be used. The steel cord can be formed of, for example, a steel monofilament or a stranded wire. Furthermore, in the wire 4b, the organic fibers, carbon fibers or the like may be used.

Additionally, in the coating resin 4a, for example, a thermoplastic elastomer or a thermoplastic resin can be used, and a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in IS075-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 4a that coats the wire 4b has a tensile elastic modulus (prescribed in JIS K7113: 1995) of 50 MPa or more. Furthermore, it is preferable that the tensile elastic modulus of the coating resin 4a that coats the wire 4b is 1000 MPa or less. Note that the coating resin 4a mentioned herein does not contain a rubber (an organic polymer material that exhibits a rubber elasticity at normal temperature).

The spiral belt can be formed, for example, by coating an outer peripheral side of the wire 4b with the molten coating resin 4a, cooling and solidifying the resin to form the resin-coated wire, and welding and bonding, to each other, the resin-coated wires adjacent in an axial direction of an annular material formed by winding the resin-coated wire while melting the coating resin 4a by hot plate welding or the like. Alternatively, depending on the embodiment, the spiral belt may be formed by bonding and joining, to each other, the resin-coated wires adjacent in the axial direction of the formed annular material with an adhesive or the like.

As illustrated in FIG. 1, in the tire 1 of the present embodiment, a base ring 6 that comes in contact with a tire widthwise outer end 4c of the resin-coated belt 4 (at least a part of the ring is located at the same position as a position of the tire widthwise outer end 4c of the resin-coated belt 4 in the tire width direction and comes in contact with the end) is provided on a tire radial inside of the resin-coated belt 4. In this example, the base ring 6 is an annular member made of a resin (in this example, the member extends continuously in a tire circumferential direction). As the resin, the same resin as the coating resin 4a of the resin-coated belt 4 may be used, or a different resin may be used. Also in a case where the resin of the base ring 6 is different from the coating resin 4a of the resin-coated belt 4, the above illustrated thermoplastic elastomer or thermoplastic resin can be used as a material of the coating resin 4a.

As illustrated in FIG. 1, a tire widthwise inner end 6a of the base ring 6 is located on an inner side of the tire widthwise outer end 4c of the resin-coated belt 4 in the tire width direction, and a tire widthwise outer end 6b of the base ring 6 is located on an outer side of the tire widthwise outer end 4c of the resin-coated belt 4 in the tire width direction. In the present disclosure, it is preferable that a width of the base ring 6 in the tire width direction is 7% or more of a width of the resin-coated belt 4 in the tire width direction. When the percentage is 7% or more, the resin-coated belt 4 can be easily disposed during manufacturing (especially in a case where the spiral belt is wound). Note that, it is possible that a central position of the base ring 6 in the tire width direction is, for example, a position of the tire widthwise outer end 4c of the resin-coated belt 4 or a tire widthwise position near the outer end. During the manufacturing, the resin-coated belt 4 can be easily disposed (especially in the case where the spiral belt is wound). Furthermore, the after-mentioned base ring 6 can securely exert an effect of decreasing a difference in level of rigidity between the resin-coated belt 4 and the rubber. A thickness of the base ring 6 can be from 0.5 to 2 mm, and a tire widthwise distance from the tire widthwise outer end 4c of the resin-coated belt 4 to each of the tire widthwise inner end 6a and outer end 6b of the base ring 6 can be 0 mm or more. Note that "the width in the tire width direction" of the base ring 6 and resin-coated belt 4 and other sizes in the present description are measured in a state where the tire is installed to an applicable rim and charged with a prescribed internal pressure and no load (provided that "the tire ground contact width" is a tire widthwise distance between ground contact ends in a state where the tire is installed to the applicable rim, and charged with the prescribed internal pressure and no load, the ground contact end being a tire widthwise outermost position of a contact patch in a state where the tire is installed to an applicable rim and charged with the prescribed internal pressure and a maximum load). In the present description, "the applicable rim" indicates an approved rim (a measuring rim in Standards Manual of ETRTO, and a design rim in Year Book of TRA) in an applicable size described or to be described in future in an industrial standard valid in a district where the tire is produced and used, for example, JATMA Year Book of JATMA (the Japan Automobile Tyre Manufacturers Association) in Japan, Standards Manual of ETRTO (the European Tyre and Rim Technical Organisation) in Europe, or Year Book of TRA (the Tire and Rim Association, Inc.) in U.S. (That is, the above rim also includes a size that can be included in the above industrial standard in future, in addition to the existing size. Examples of "the size to be described in future" can include sizes described as "future developments" in 2013 edition of Standards Manual of ETRTO.) However, it is considered that a rim having a size that is not described in the above industrial standard is a rim having a width corresponding to a bead width of the tire. Additionally, "the prescribed internal pressure" indicates an air pressure (a maximum air pressure) corresponding to a tire maximum load capability of a standard such as JATMA described above in the tire of the applicable size. Note that in case of a size that is not described in the above industrial standard, "the prescribed internal pressure" is an air pressure (the maximum air pressure) corresponding to the maximum load capability prescribed for each vehicle to which the tire is installed. "The maximum load" means a load corresponding to the tire maximum load capability of the standard such as JATMA described above in the tire of the applicable size, or the maximum load capability prescribed for each vehicle to which the tire is installed in a case where the load has a size that is not described in the above industrial standard.

Here, in the pneumatic tire 1 of the present embodiment, as schematically illustrated in FIG. 1, the resin-coated belt 4 has a rigidity changing portion (a rigidity decreasing portion R where the rigidity decreases in this example) where the rigidity changes from the tire widthwise inner side toward the tire widthwise outer side, in a tire widthwise region from a tire widthwise inner end 6a of the base ring 6 to a tire widthwise outer end 4c of the resin-coated belt 4. Specifically, in the rigidity decreasing portion, tire widthwise spacings of the wire 4b of the resin-coated belt 4 become wider from the tire widthwise inner side toward the tire widthwise outer side (continuously and gradually become wider from the tire widthwise inner side toward the tire widthwise outer side in the present embodiment).

Hereinafter, effects of the pneumatic tire of the present embodiment will be described.

According to the pneumatic tire of the present embodiment, first, the base ring 6 that comes in contact with the tire widthwise outer end 4c of the resin-coated belt 4 is provided on the tire radial inside of the resin-coated belt 4. Consequently, the difference in level of rigidity with the tire widthwise outer end 4c of the resin-coated belt 4 as a boundary can be decreased as in the case where a shape and large difference in level of rigidity occurs between the resin-coated belt 4 and the rubber in the tire width direction (a case where the base ring 6 is not provided). Furthermore, the resin-coated belt 4 has the rigidity decreasing portion where the rigidity decreases from the tire widthwise inner side toward the tire widthwise outer side in the tire widthwise region from the tire widthwise inner end 6a of the base ring 6 to the tire widthwise outer end 4c of the resin-coated belt 4. Consequently, the sharp and large difference in level of rigidity between the resin-coated belt 4 and the rubber is further decreased.

As described above, according to the present embodiment, a sharp and large difference in level of rigidity between the resin-coated belt 4 and the rubber is decreased, so that occurrence of a failure near an end portion of the resin-coated belt 4 can be inhibited.

Note that since the base ring 6 is provided, the decrease in rigidity by the rigidity decreasing portion can be compensated.

Furthermore, according to the present embodiment in particular, processing and forming is easy since one resin-coated wire is wound by varying the tightness of its arrangement.

Moreover, in the present embodiment, the base ring 6 is provided, so that when manufacturing the spiral belt by winding the resin-coated wire, the resin-coated wire can be wound by using the base ring 6 as a base at both the winding start side and the winding end side. This makes it easier to arrange the resin-coated belt 4, and makes the winding step more simple.

Note that in the example illustrated in FIG. 1, the rigidity decreasing portion is a portion where the tire widthwise spacings of the wire 4b of the resin-coated belt 4 continuously and gradually become wider from the tire widthwise inner side toward the tire widthwise outer side. However, the widening of the tire widthwise spacings does not have to be continuous in the present disclosure. For example, the wire 4b may be arranged at intervals of a first distance in a certain tire widthwise region, and may be arranged at intervals of a second distance larger than the first distance in a tire widthwise region on the tire widthwise outer side of the certain tire widthwise region.

Furthermore when widening the spacings of the wire 4b, if the coating resins of the resin-coated wires adjacent in the tire width direction are separated (if the coating resins adjacent in the tire width direction are not bonded to each other), the resin-coated wire and the base ring 6 adjacent in the step direction are bonded together by welding or by an adhesive.

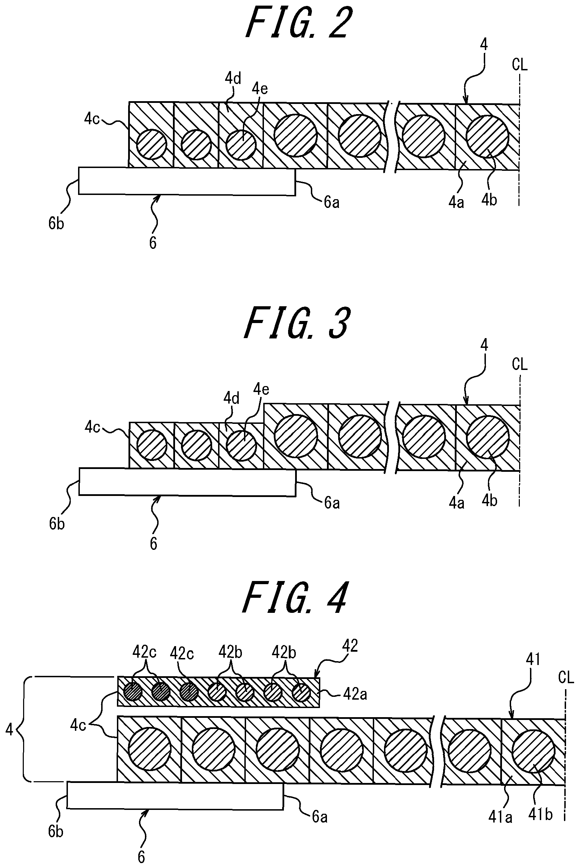

FIG. 2 is a schematic partially cross-sectional view in a tire width direction, illustrating a resin-coated belt of a pneumatic tire according to a different embodiment of the present disclosure. FIG. 2 only illustrates one tire widthwise half portion with a tire equatorial plane CL as a boundary, and omits depiction of the other half portion. The other half portion also has a similar configuration. Note that configurations other than the resin-coated belt 4 are similar to those of the embodiment illustrated in FIG. 1.

As illustrated in FIG. 2, in the different embodiment, too, a resin-coated belt 4 has a rigidity decreasing portion where the rigidity decreases from the tire widthwise inner side toward the tire widthwise outer side in a tire widthwise region from a tire widthwise inner end 6a of a base ring 6 to a tire widthwise outer end 4c of the resin-coated belt 4. Specifically, in the different embodiment, the rigidity decreasing portion is formed of two or more (two in the example) types of resin-coated wires having different rigidities, and of the two or more types of resin-coated wires, the resin-coated wire having a lower rigidity is arranged farther on the tire widthwise outer side.

In the example illustrated in FIG. 2, in one tire widthwise region on the tire widthwise inner side, the resin-coated wire is formed by coating a wire 4b having a first diameter with a coating resin 4a (four wires 4b coated with the coating resin 4a in the illustrated range in the example), and meanwhile, in a tire widthwise region on the tire widthwise outer side of the one tire widthwise region, the resin-coated wire is formed by coating a wire 4e having a second diameter smaller than the first diameter with a coating resin 4d (three wires 4e coated with the coating resin 4d in the example). Accordingly, the resin-coated wire having a lower rigidity is arranged farther on the tire widthwise outer side.

According to the pneumatic tire of the different embodiment, first, the base ring 6 that comes in contact with the tire widthwise outer end 4c of the resin-coated belt 4 is provided on the tire radial inner side of the resin-coated belt 4. Consequently, the difference in level of rigidity with the tire widthwise outer end 4c of the resin-coated belt 4 as a boundary can be decreased as compared to a case where a sharp and large difference in level of rigidity occurs between the resin-coated belt 4 and the rubber in the tire width direction (a case where the base ring 6 is not provided). Moreover, since the resin-coated wire having a lower rigidity is arranged farther on the tire widthwise outer side, the sharp and large difference in level of rigidity between the resin-coated belt 4 and the rubber can be further decreased.

Note that since the base ring 6 is provided, the decrease in rigidity by the rigidity decreasing portion can be compensated.

As described above, according to the different embodiment, too, a sharp and large difference in level of rigidity between the resin-coated belt 4 and the rubber is decreased, so that occurrence of a failure near an end portion of the resin-coated belt 4 can be inhibited.

Particularly according to the different embodiment, the widthwise rigidity and flexural rigidity can be decreased appropriately while maintaining the circumferential rigidity.

Moreover, in the present embodiment, the base ring 6 is provided, so that when manufacturing the spiral belt by winding the resin-coated wire, the resin-coated wire can be wound by using the base ring 6 as a base at both the winding start side and the winding end side. This makes it easier to arrange the resin-coated belt 4, and makes the winding step more simple.

Note that while the above embodiment uses two types of resin-coated wires having different rigidities, the number of types of resin-coated wires may be two or more. For example, if there are three types of resin-coated wires, a resin-coated wire having a first rigidity, a resin-coated wire having a second rigidity lower than the first rigidity, and a resin-coated wire having a third rigidity lower than the first and second rigidity are used. The resin-coated wire having the first rigidity, the resin-coated wire having the second rigidity, and the resin-coated wire having the third rigidity may be arranged in this order from the tire widthwise inner side toward the tire widthwise outer side. Each of the two or more types of resin-coated wires can be formed by winding, and from the viewpoint of improving workability using the base ring 6 as a base, it is preferable to first form the resin-coated belt to be arranged on the tire widthwise outer side.

Furthermore, in the example illustrated in FIG. 2, when arranging the resin-coated wire having a lower rigidity farther on the tire widthwise outer side, the rigidity is varied by varying the diameter size of the wires 4b, 4e while using the same material for the wires 4b, 4e and for the coating resins 4a, 4d. However, the rigidity may be varied by varying the material of the wires or varying the number of wires (e.g., two or more wires may be coated with coating resin). Alternatively, the rigidity of the resin-coated wire can be adjusted by varying the material of the coating resin.

FIG. 3 is a schematic partially cross-sectional view in a tire width direction, illustrating a resin-coated belt of a pneumatic tire according to another embodiment of the present disclosure. FIG. 3 only illustrates one tire widthwise half portion with a tire equatorial plane CL as a boundary, and omits depiction of the other half portion. The other half portion also has a similar configuration. Note that configurations other than the resin-coated belt 4 are similar to those of the embodiments illustrated in FIGS. 1 and 2.

As illustrated in FIG. 3, in the other embodiment, too, a resin-coated belt 4 has a rigidity decreasing portion where the rigidity decreases from the tire widthwise inner side toward the tire widthwise outer side in a tire widthwise region from a tire widthwise inner end 6a of a base ring 6 to a tire widthwise outer end 4c of the resin-coated belt 4. Specifically, in the rigidity decreasing portion of the other embodiment, the thickness in the tire radial direction of the resin-coated wire in a cross-section in the tire width direction reduces toward the tire widthwise outer side.

In the example illustrated in FIG. 3, in one tire widthwise region on the tire widthwise inner side, the resin-coated wire is formed by coating a wire 4b having a first diameter with a coating resin 4a having a first thickness, and meanwhile, in a tire widthwise region on the tire widthwise outer side of the one tire widthwise region, the resin-coated wire is formed by coating a wire 4e having a second diameter smaller than the first diameter with a coating resin 4d having a second thickness smaller than the first thickness. Accordingly, the thickness in the tire radial direction of the resin-coated wire in a cross-section in the tire width direction reduces toward the tire widthwise outer side.

According to the pneumatic tire of the other embodiment, first, the base ring 6 that comes in contact with the tire widthwise outer end 4c of the resin-coated belt 4 is provided on the tire radial inner side of the resin-coated belt 4. Consequently, the difference in level of rigidity with the tire widthwise outer end 4c of the resin-coated belt 4 as a boundary can be decreased as compared to a case where a sharp and large difference in level of rigidity occurs between the resin-coated belt 4 and the rubber in the tire width direction (a case where the base ring 6 is not provided). Moreover, since the thickness in the tire radial direction of the resin-coated wire in a cross-section in the tire width direction reduces toward the tire widthwise outer side, the sharp and large difference in level of rigidity between the resin-coated belt 4 and the rubber can be further decreased.

Note that since the base ring 6 is provided, the decrease in rigidity by the rigidity decreasing portion can be compensated.

As described above, according to the other embodiment, too, a sharp and large difference in level of rigidity between the resin-coated belt 4 and the rubber is decreased, so that occurrence of a failure near an end portion of the resin-coated belt 4 can be inhibited.

Particularly according to the other embodiment, by locally (on the tire widthwise outer side) reducing the thickness of the resin-coated wire, the weight of the resin-coated wire can be reduced.

Moreover, in the present embodiment, the base ring 6 is provided, so that when manufacturing the spiral belt by winding the resin-coated wire, the resin-coated wire can be wound by using the base ring 6 as a base at both the winding start side and the winding end side. This makes it easier to arrange the resin-coated belt 4, and makes the winding step more simple.

Note that in the example illustrated in FIG. 3, in the region on the tire widthwise outer side, both the diameter of the wire 4d and the coating thickness of the coating resin 4e are made smaller than the diameter of the wire 4b and the coating thickness of the coating resin 4a in the region on the tire widthwise inner side. However, as a modification of the other embodiment, it is only necessary to make the total thickness of the resin-coated wire smaller in the tire widthwise direction by making any of the diameter of the wire 4d and the coating thickness of the coating resin 4e small, and thereby forming a rigidity decreasing portion where the rigidity decreases from the tire widthwise inner side toward the tire widthwise outer side.

FIG. 4 is a schematic partially cross-sectional view in a tire width direction, illustrating a resin-coated belt of a pneumatic tire according to yet another embodiment of the present disclosure. FIG. 4 only illustrates one tire widthwise half portion with a tire equatorial plane CL as a boundary, and omits depiction of the other half portion. The other half portion also has a similar configuration. Note that configurations other than the resin-coated belt 4 are similar to those of the embodiments illustrated in FIGS. 1, 2, and 3.

As illustrated in FIG. 4, in the yet another embodiment, too, a resin-coated belt 4 has a rigidity decreasing portion where the rigidity decreases from the tire widthwise inner side toward the tire widthwise outer side in a tire widthwise region from a tire widthwise inner end 6a of a base ring 6 to a tire widthwise outer end 4c of the resin-coated belt 4. Specifically, in the yet another embodiment, the resin-coated belt 4 includes a first resin-coated belt layer 41 that comes in contact with the base ring 6, and one or more (one in the example) layers of second resin-coated belt layers 42 arranged on the tire radial outer side of the first resin-coated belt layer 41. The first resin-coated belt layer 41 is configured of a resin-coated wire formed of a wire 41b coated with a coating resin 41a, and the second resin-coated belt layer 42 has an outer-layer rigidity decreasing portion where the rigidity decreases from the tire widthwise inner side toward the tire widthwise outer side.

More specifically, in the example illustrated in FIG. 4, the width of the second resin-coated belt layer 42 in the tire width direction is smaller than the width of the first resin-coated belt layer 41 in the tire width direction. Then, the second resin-coated belt layer 42 is stacked on the tire radial outer side of a tire widthwise outer half portion of the first resin-coated belt layer 41. In the second resin-coated belt layer 42, in one tire widthwise inner region, a wire 42b (four in the example) formed of a first material is coated with a coating resin 42a, and meanwhile, in a tire widthwise region on the tire widthwise outer side of the one tire widthwise region, a wire 42c (three in the example) formed of a second material having a lower rigidity than the first material is coated with the coating resin 42a. Accordingly, the second resin-coated belt layer 42 has the outer-layer rigidity decreasing portion where the rigidity decreases from the tire widthwise inner side toward the tire widthwise outer side. Note that in the illustrated example, a tire widthwise outer end of the first resin-coated belt layer 41 and a tire widthwise outer end of the second resin-coated belt layer 42 are in the substantially same tire widthwise position. This means that the resin-coated belt 4, too, has the rigidity decreasing portion where the rigidity decreases from the tire widthwise inner side toward the tire widthwise outer side in the tire widthwise region from the tire widthwise inner end 6a of the base ring 6 to the tire widthwise outer end 4c of the resin-coated belt 4.

According to the pneumatic tire of the yet another embodiment, first, the base ring 6 that comes in contact with the tire widthwise outer end 4c of the resin-coated belt 4 is provided on the tire radial inner side of the resin-coated belt 4. Consequently, the difference in level of rigidity with the tire widthwise outer end 4c of the resin-coated belt 4 as a boundary can be decreased as compared to a case where a sharp and large difference in level of rigidity occurs between the resin-coated belt 4 and the rubber in the tire width direction (a case where the base ring 6 is not provided). Moreover, since the second resin-coated belt layer 42 has the outer-layer rigidity decreasing portion where the rigidity decreases from the tire widthwise inner side toward the tire widthwise outer side, and therefore the resin-coated belt 4 has the rigidity decreasing portion where the rigidity decreases from the tire widthwise inner side toward the tire widthwise outer side in the tire widthwise region from the tire widthwise inner end 6a of the base ring 6 to the tire widthwise outer end 4c of the resin-coated belt 4, the sharp and large difference in level of rigidity between the resin-coated belt 4 and the rubber can be further decreased.

Note that since the base ring 6 is provided, the decrease in rigidity by the rigidity decreasing portion can be compensated.

As described above, according to the yet another embodiment, too, a sharp and large difference in level of rigidity between the resin-coated belt 4 and the rubber is decreased, so that occurrence of a failure near an end portion of the resin-coated belt 4 can be inhibited.

Particularly according to the yet another embodiment, since the second resin-coated belt layer 42 is provided, high-speed durability can be improved.

Moreover, in the present embodiment, the base ring 6 is provided, so that when manufacturing the spiral belt by winding the resin-coated wire, the resin-coated wire can be wound by using the base ring 6 as a base at both the winding start side and the winding end side. This makes it easier to arrange the resin-coated belt 4, and makes the winding step more simple.

The second resin-coated belt layer 42 illustrated in FIG. 4 can be formed by placing wires 42b, 42c having different rigidities side by side and coating them with the same coating resin 42a, for example.

Note that in the example illustrated in FIG. 4, the two or more types of wires 42b, 42c formed of materials having different rigidities are used to provide the second resin-coated belt layer 42 with the outer-layer rigidity decreasing portion where the rigidity decreases from the tire widthwise inner side toward the tire widthwise outer side. Alternatively, in the second resin-coated belt layer 42, the rigidity can be adjusted by varying the rigidity according to various methods such as varying the diameter of the wire, varying the material of the coating resin, or varying the thickness of the resin-coated wire, for example.

Furthermore, while the example illustrated in FIG. 4 uses the wires 42b, 42c formed of two different types of materials, the number of types of materials may be three or more, and various rigidity adjustment method can be used as described above. Then, the wire having a smaller rigidity can be arranged on the tire widthwise outer side.

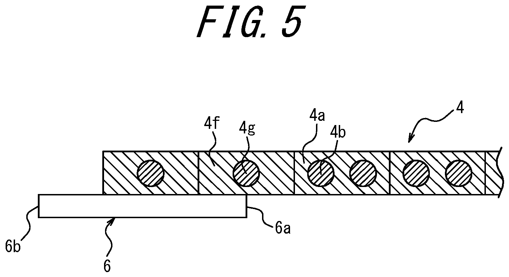

FIG. 5 is a schematic partially cross-sectional view in a tire width direction, illustrating a resin-coated belt of a pneumatic tire according to still yet another embodiment of the present disclosure. In the example illustrated in FIG. 5, a resin-coated belt 4 is formed by winding a resin-coated wire in which two wires 4b are coated with a coating resin 4a in one tire widthwise inner region, and meanwhile, the resin-coated belt 4 is formed by winding a resin-coated wire in which one wire 4g is coated with a coating resin 4f in a tire widthwise region on the tire widthwise outer side of the one tire widthwise region. Thus, a rigidity decreasing portion where the rigidity changes from the tire widthwise inner side toward the tire widthwise outer side is formed. Note that the diameter of the wire 4b and the diameter of the wire 4g are the same. According to the embodiment illustrated in FIG. 5, too, first, a base ring 6 that comes in contact with a tire widthwise outer end 4c of the resin-coated belt 4 is provided on the tire radial inner side of the resin-coated belt 4. Consequently, the difference in level of rigidity with the tire widthwise outer end 4c of the resin-coated belt 4 as a boundary can be decreased as compared to a case where a sharp and large difference in level of rigidity occurs between the resin-coated belt 4 and the rubber in the tire width direction (a case where the base ring 6 is not provided). Moreover, since the rigidity decreasing portion is provided, the sharp and large difference in level of rigidity between the resin-coated belt 4 and the rubber can be further decreased. Note that since the base ring 6 is provided, the decrease in rigidity by the rigidity decreasing portion can be compensated. As described above, according to the still yet another embodiment, too, a sharp and large difference in level of rigidity between the resin-coated belt 4 and the rubber is decreased, so that occurrence of a failure near an end portion of the resin-coated belt 4 can be inhibited. Particularly according to the still yet another embodiment, since two types of resin-coated wires having different numbers of wires are prepared, the rigidity decreasing portion can be formed easily. Moreover, in the present embodiment, the base ring 6 is provided, so that when manufacturing the spiral belt by winding the resin-coated wire, the resin-coated wire can be wound by using the base ring 6 as a base at both the winding start side and the winding end side. This makes it easier to arrange the resin-coated belt 4, and makes the winding step more simple.

As above, the embodiments of the present disclosure are described, but the present disclosure is not limited to the above embodiments in any way. For example, as a modification of the embodiment illustrated in FIG. 4, the number of second resin-coated belt layers 42 may be varied in the tire width direction, and multiple second resin-coated belt layers 42 may be used to form the outer-layer rigidity decreasing portion where the rigidity decreases from the tire widthwise inner side toward the tire widthwise outer side. In this case, less second resin belt layers 42 can be formed farther on the tire widthwise outer side. Furthermore, while it is only necessary that at least one of the multiple second resin-coated belt layers 42 have the outer-layer rigidity decreasing portion, it is preferable that two or more second resin-coated belt layers 42 have the outer-layer rigidity decreasing portion, and preferable that all of the layers have the outer-layer rigidity decreasing portion.

### REFERENCE SIGNS LIST

- 1: pneumatic tire
- 2: bead portion
- 2a: bead core
- 3: carcass
- 4: resin-coated belt
- 4a, 4d, 4f: coating resin
- 4b, 4e, 4g: wire
- 4c: tire widthwise outer end of the resin-coated belt
- 5: tread
- 6: base ring
- 6a: tire widthwise inner end of the base ring
- 6b: tire widthwise outer end of the base ring
- 41: first resin-coated belt layer
- 41a: coating resin
- 41b: wire
- 42: second resin-coated belt layer
- 42a: coating resin
- 42b, 42c: wire
- CL: tire equatorial plane

## Claims

1. A pneumatic tire comprising a resin-coated belt formed by arranging a resin-coated wire coated with a coating resin in a tire width direction, wherein:
a base ring that comes in contact with a tire widthwise outer end of the resin-coated belt is provided on a tire radial inside of the resin-coated belt;
a tire widthwise inner end of the base ring is located on an inner side of the tire widthwise outer end of the resin-coated belt in a tire width direction, while a tire widthwise outer end of the base ring is located on an outer side of the tire widthwise outer end of the resin-coated belt in the tire width direction; and
the resin-coated belt has a rigidity changing portion where a rigidity changes from the tire widthwise inner side toward the tire widthwise outer side in a tire widthwise region from the tire widthwise inner end of the base ring to the tire widthwise outer end of the resin-coated belt.

2. The pneumatic tire according to claim 1, wherein the rigidity changing portion is a rigidity decreasing portion where the rigidity decreases from the tire widthwise inner side toward the tire widthwise outer side.

3. The pneumatic tire according to claim 2, wherein in the rigidity decreasing portion, tire widthwise spacings of the wire become wider from the tire widthwise inner side toward the tire widthwise outer side.

4. The pneumatic tire according to claim 2, wherein the rigidity decreasing portion includes two or more types of the resin-coated wires having different rigidities, and of the two or more types of the resin-coated wires, the resin-coated wire having a lower rigidity is arranged farther on the tire widthwise outer side.

5. The pneumatic tire according to claim 2, wherein in the rigidity decreasing portion, a thickness of the resin-coated wire in a cross-section in the tire width direction reduces toward the tire widthwise outer side.

6. The pneumatic tire according to claim 2, wherein
the resin-coated belt includes a first resin-coated belt layer that comes in contact with the base ring, and one or more second resin-coated belt layers arranged on a tire radial outer side of the first resin-coated belt layer, and
at least one of the second resin-coated belt layers has an outer-layer rigidity decreasing portion where the rigidity decreases from the tire widthwise inner side toward the tire widthwise outer side.
